# EUROPEAN PATENT APPLICATION

(11) **EP 4 618 568 A1**
(43) Date of publication of application: **17.09.2025**
(21) Application number: 22965263.1
(22) Date of filing: 11.11.2022
(51) Int. Cl.: H04N 21/485, H04N 23/00, G06T 7/13, G06T 5/40, G06T 5/20

(54) **TRANSPARENT DISPLAY DEVICE AND OPERATING METHOD THEREFOR**

(71) Applicant: LG Electronics Inc., Yeongdeungpo-gu Seoul 07336 (KR)
(72) Inventor: SEOL, Seongwoon, Seoul 06772 (KR); AHN, Sangjin, Seoul 06772 (KR)
(74) Representative: Schornack, Oliver
(86) International application number: PCT/KR2022/017792
(87) International publication number: WO 2024/101491

(57) **Abstract**

The present disclosure relates to automatic setting of image quality of a transparent display device. The transparent display device according to an embodiment of the present disclosure may comprise: a transparent display for displaying a content image; a camera for capturing a rear image of the transparent display; and a controller for acquiring first RGB information about the content image and second RGB information about the rear image, comparing the first RGB information to the second RGB information, and controlling image quality of the content image on the basis of the comparison result.

## Description

### [Technical Field]

The present disclosure relates to a transparent display device.

### [Background Art]

Information displays are evolving into new forms as technology advances. Among them, transparent display devices have the unique advantage of being able to display information as a background.

Transparent display devices display information on a transparent screen by utilizing the property of transmitting light.

As transparent display devices become more popular, they are expected to provide users with new interfaces when combined with content such as augmented reality.

Transparent display devices, by their very nature, are inevitably affected by the surrounding background.

Previously registered Korean patent No. 10-2366315 discloses a technology for improving image quality by adaptively correcting an image according to the driving characteristics and rear background characteristics of a transparent display device.

### [Disclosure]

### [Technical Problem]

An object of the present disclosure is to automatically set the image quality of a transparent display device.

An object of the present disclosure is to provide optimal image quality regardless of the surrounding background of a transparent display device.

An object of the present disclosure is to change the properties of an OSD image according to the texture of the content image.

### [Technical Solution]

A transparent display device according to an embodiment of the present disclosure may include a transparent display displaying a content image; a camera photographing a rear image of the transparent display; and a controller obtaining first RGB information on the content image and second RGB information on the rear image, comparing the first RGB information and the second RGB information, and controlling the image quality of the content image based on the comparison result.

A method for operating a transparent display device according to an embodiment of the present disclosure may include displaying a content image on a transparent display; photographing a rear image of the transparent display; obtaining first RGB information on the content image and second RGB information on the rear image; comparing the first RGB information and the second RGB information; and controlling the image quality of the content image based on a comparison result.

### [Advantageous Effect]

According to various embodiments of the present disclosure, a user can be guaranteed visibility and readability of an image regardless of the surrounding background when viewing the image through a transparent display.

According to an embodiment of the present disclosure, the visibility and readability of an OSD image can be improved by changing the position and color of the OSD image according to the texture of the content image.

### [Description of Drawings]

FIG. 1 is a block diagram illustrating a configuration of a display device according to an embodiment of the present disclosure.

FIG. 2 is a block diagram illustrating a remote control device according to an embodiment of the present disclosure.

FIG. 3 is a view illustrating an actual configuration of a remote control device according to an embodiment of the present disclosure.

FIG. 4 is a view illustrating an example of utilizing a remote control device according to an embodiment of the present disclosure.

FIG. 5 is a view illustrating the configuration of a transparent display device according to an embodiment of the present disclosure.

FIGS. 6a to 6d are views explaining various types of transparent display devices.

FIG. 7 is a view explaining a side structure of a transparent type of display device of the present disclosure.

FIG. 8 is a flowchart for explaining a method for operating a transparent display device according to an embodiment of the present disclosure.

FIG. 9 is a view explaining a process for automatically setting the image quality of an image displayed on a transparent display according to an embodiment of the present disclosure.

FIGS. 10 and 11 are views illustrating a process of controlling image quality of an image according to the rear background of a transparent display according to one embodiment of the present disclosure.

FIG. 12 is a flowchart for explaining a method for operating a transparent display device according to another embodiment of the present disclosure.

FIGS. 13 to 16 are views illustrating examples of changing properties of an OSD image based on texture information of a content image displayed on an OSD area where the OSD image is located according to an embodiment of the present disclosure.

FIG. 17 is a view explaining a method for controlling image quality of a transparent display device according to another embodiment of the present disclosure.

### [Best Mode]

Hereinafter, embodiments relating to the present disclosure will be described in detail with reference to the accompanying drawings. The suffixes "module" and "unit" for components used in the description below are assigned or mixed in consideration of easiness in writing the specification and do not have distinctive meanings or roles by themselves.

A display device according to an embodiment of the present disclosure is an intelligent display device that adds a computer-assisted function to, for example, a broadcast reception function, and while remaining faithful to the broadcast reception function, adds an Internet function or the like and may have a more convenient interface such as a manual input device, a touch screen, or a space remote control. In addition, with the support of wired or wireless Internet functions, it is possible to connect to the Internet and a computer, and perform functions such as email, web browsing, banking, or games. A standardized general-purpose OS may be used for these various functions.

Accordingly, the display device described in the present disclosure may perform various user-friendly functions, for example, since various applications may be freely added or deleted on a general-purpose OS kernel. More specifically, the display device may be, for example, a network TV, an HBBTV, a smart TV, an LED TV, an OLED TV, or the like and in some cases, may also be applied to a smartphone.

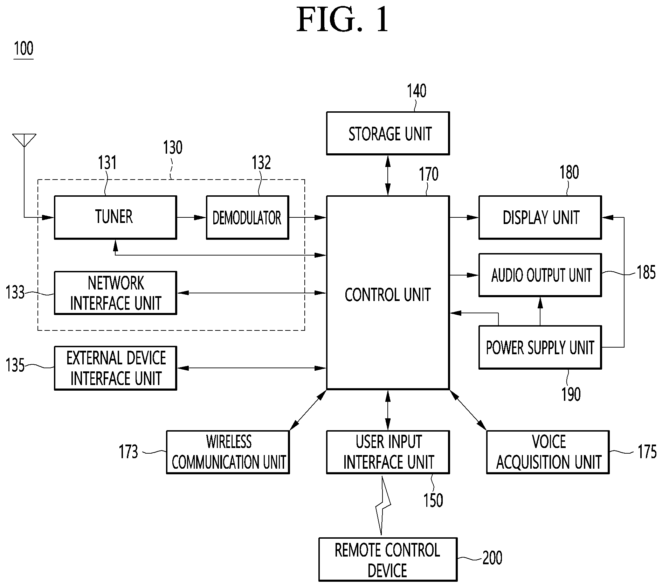

FIG. 1 is a block diagram illustrating a configuration of a display device according to an embodiment of the present disclosure.

Referring to FIG. 1, a display device 100 may include a broadcast reception part 130, an external device interface 135, a memory 140, a user input interface 150, a controller 170, a wireless communication interface 173, a display 180, a speaker 185, and a power supply circuit 190.

The broadcast reception part 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulator 132 may divide the received broadcast signals into image signals, audio signals, and broadcast program-related data signals, and may restore the divided image signals, audio signals, and data signals into an output available form.

The external device interface 135 may receive an application or an application list in an adjacent external device and deliver the application or the application list to the controller 170 or the memory 140.

The external device interface 135 may provide a connection path between the display device 100 and an external device. The external device interface 135 may receive at least one of an image or audio outputted from an external device that is wirelessly or wiredly connected to the display device 100 and deliver the received image or the audio to the controller. The external device interface 135 may include a plurality of external input terminals. The plurality of external input terminals may include an RGB terminal, at least one High Definition Multimedia Interface (HDMI) terminal, and a component terminal.

An image signal of an external device inputted through the external device interface 135 may be outputted through the display 180. A sound signal of an external device inputted through the external device interface 135 may be outputted through the speaker 185.

An external device connectable to the external device interface 135 may be one of a set-top box, a Blu-ray player, a DVD player, a game console, a sound bar, a smartphone, a PC, a USB Memory, and a home theater system but this is just exemplary.

The network interface 133 may provide an interface for connecting the display device 100 to a wired/wireless network comprising internet network. The network interface 133 may transmit or receive data to or from another user or another electronic device through an accessed network or another network linked to the accessed network.

Additionally, some content data stored in the display device 100 may be transmitted to a user or an electronic device, which is selected from other users or other electronic devices pre-registered in the display device 100.

The network interface 133 may access a predetermined webpage through an accessed network or another network linked to the accessed network. In other words, the network interface 133 may transmit or receive data to or from a corresponding server by accessing a predetermined webpage through the network.

The network interface 133 may receive content or data provided from a content provider or a network operator. In other words, the network interface 133 may receive content, such as movies, advertisements, games, VODs, and broadcast signals, which are provided from the content provider or the network operator, and information relating thereto through the network.

In addition, the network interface 133 may receive firmware update information and update files provided from the network operator, and may transmit data to the Internet or content provider or the network operator.

The network interface 133 may select and receive a desired application among applications open to the air, through network.

The memory 140 may store signal-processed image, voice, or data signals stored by a program in order for each signal processing and control in the controller 170.

In addition, the memory 140 may perform a function for temporarily storing image, voice, or data signals output from the external device interface 135 or the network interface 133, and may store information on a predetermined image through a channel memory function.

The memory 140 may store an application or an application list input from the external device interface 135 or the network interface 133.

The display device 100 may play content files (e.g., video files, still image files, music files, document files, application files, etc.) stored in the memory 140, and may provide the content files to a user.

The user input interface 150 may transmit signals input by a user to the controller 170, or may transmit signals from the controller 170 to a user. For example, the user input interface 150 may receive or process control signals such as power on/off, channel selection, and screen setting from the remote control device 200 or transmit control signals from the controller 170 to the remote control device 200 according to various communication methods such as Bluetooth, Ultra Wideband (WB), ZigBee, Radio Frequency (RF), and IR communication methods.

In addition, the user input interface 150 may transmit, to the controller 170, control signals input from local keys (not illustrated) such as a power key, a channel key, a volume key, and a setting key.

Image signals that are image-processed by the controller 170 may be input to the display 180 and displayed as images corresponding to the image signals. In addition, image signals that are image-processed by the controller 170 may be input to an external output device through the external device interface 135.

Voice signals processed by the controller 170 may be output to the speaker 185. In addition, voice signals processed by the controller 170 may be input to the external output device through the external device interface 135.

Additionally, the controller 170 may control overall operations of the display device 100.

In addition, the controller 170 may control the display device 100 by a user command or an internal program input through the user input interface 150, and may access the network to download a desired application or application list into the display device 100.

The controller 170 may output channel information selected by a user together with the processed image or voice signals through the display 180 or the speaker 185.

In addition, the controller 170 may output image signals or voice signals of an external device such as a camera or a camcorder, which are input through the external device interface 135, through the display 180 or the speaker 185, according to an external device image playback command received through the user input interface 150.

Moreover, the controller 170 may control the display 180 to display images, and may control the display 180 to display broadcast images input through the tuner 131, external input images input through the external device interface 135, images input through the network interface, or images stored in the memory 140. In this case, an image displayed on the display 180 may be a still image or video and also may be a 2D image or a 3D image.

Additionally, the controller 170 may play content stored in the display device 100, received broadcast content, and external input content input from the outside, and the content may be in various formats such as broadcast images, external input images, audio files, still images, accessed web screens, and document files.

Moreover, the wireless communication interface 173 may perform wired or wireless communication with an external device. The wireless communication interface 173 may perform short-range communication with an external device. For this, the wireless communication interface 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication interface 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication interface 173 may detect (or recognize) a wearable device capable of communication around the display device 100.

Furthermore, if the detected wearable device is a device authenticated to communicate with the display device 100, the controller 170 may transmit at least part of data processed in the display device 100 to the wearable device through the wireless communication interface 173. Therefore, a user of the wearable device may use the data processed by the display device 100 through the wearable device.

The display 180 may convert image signals, data signals, or on-screen display (OSD) signals, which are processed in the controller 170, or images signals or data signals, which are received in the external device interface 135, into R, G, and B signals to generate driving signals.

Furthermore, the display device 100 illustrated in FIG. 1 is just one embodiment of the present disclosure and thus, some of the components illustrated may be integrated, added, or omitted according to the specification of the actually implemented display device 100.

In other words, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike FIG. 1, the display device 100 may receive images through the network interface 133 or the external device interface 135 and play them without including the tuner 131 and the demodulator 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to FIG. 1, an image processing device such as the separated set-top box, and a content playback device including the display 180 and the speaker 185.

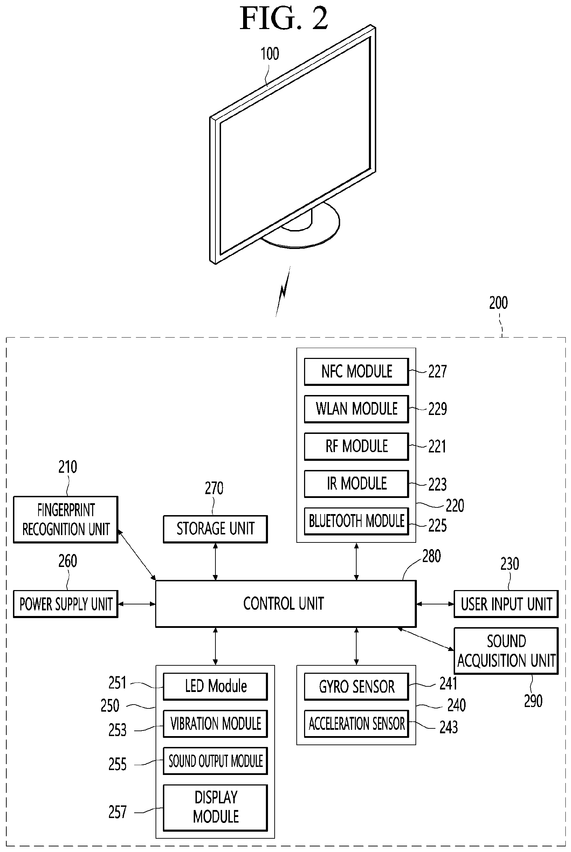

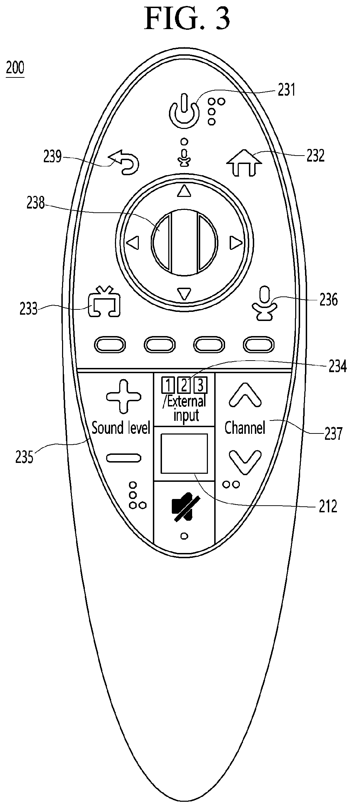

A remote control device according to an embodiment of the present disclosure will be described with reference to Figs. 2 and 3.

FIG. 2 is a block diagram illustrating a remote control device according to an embodiment of the present disclosure and FIG. 3 is a view illustrating an actual configuration of a remote control device according to an embodiment of the present disclosure.

First, referring to FIG. 2, a remote control device 200 may include a fingerprint recognition device 210, a wireless communication interface 220, a user input interface 230, a sensor 240, an output interface 250, a power supply circuit 260, a memory 270, a controller 280, and a microphone 290.

Referring to FIG. 2, the wireless communication interface 220 transmits/receives signals to/from an arbitrary any one of display devices according to the above-mentioned embodiments of the present disclosure.

The remote control device 200 may include a radio frequency (RF) circuit 221 capable of transmitting or receiving signals to or from the display device 100 according to an RF communication standard, and an IR circuit 223 capable of transmitting or receiving signals to or from the display device 100 according to an IR communication standard. In addition, the remote control device 200 may include a Bluetooth circuit 225 capable of transmitting or receiving signals to or from the display device 100 according to a Bluetooth communication standard. In addition, the remote control device 200 may include an NFC circuit 227 capable of transmitting or receiving signals to or from the display device 100 according to an NFC communication standard, and a wireless LAN (WLAN) circuit 229 capable of transmitting or receiving signals to or from the display device 100 according to a WLAN communication standard.

In addition, the remote control device 200 may transmit signals containing information on the movement of the remote control device 200 to the display device 100 through the wireless communication interface 220.

Moreover, the remote control device 200 may receive signals transmitted from the display device 100 through the RF circuit 221 and if necessary, may transmit a command for power on/off, channel change, and volume change to the display device 100 through the IR circuit 223.

The user input interface 230 may be configured with a keypad, a button, a touch pad, or a touch screen. A user may operate the user input interface 230 to input a command relating to the display device 100 to the remote control device 200. If the user input interface 230 includes a hard key button, a user may input a command relating to the display device 100 to the remote control device 200 through the push operation of the hard key button. This will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation.

The power button 231 may be a button for turning on/off the power of the display device 100.

The home button 232 may be a button for moving to the home screen of the display device 100.

The live button 233 may be a button for displaying live broadcast programs.

The external input button 234 may be a button for receiving an external input connected to the display device 100.

The volume control button 235 may be a button for controlling a volume output from the display device 100.

The voice recognition button 236 may be a button for receiving user's voice and recognizing the received voice.

The channel change button 237 may be a button for receiving broadcast signals of a specific broadcast channel.

The OK button 238 may be a button for selecting a specific function, and the back button 239 may be a button for returning to a previous screen.

FIG. 2 is described again.

If the user input interface 230 includes a touch screen, a user may touch a soft key of the touch screen to input a command relating to the display device 100 to the remote control device 200. In addition, the user input interface 230 may include various kinds of input interfaces operable by a user, for example, a scroll key and a jog key, and this embodiment does not limit the scope of the present disclosure.

The sensor 240 may include a gyro sensor 241 or an acceleration sensor 243. The gyro sensor 241 may sense information on the movement of the remote control device 200.

For example, the gyro sensor 241 may sense information on an operation of the remote control device 200 on the basis of x, y, and z axes and the acceleration sensor 243 may sense information on a movement speed of the remote control device 200. Moreover, the remote control device 200 may further include a distance measurement sensor that senses a distance with respect to the display 180 of the display device 100.

The output interface 250 may output image or voice signals in response to the operation of the user input interface 230, or may output image or voice signals corresponding to signals transmitted from the display device 100.

A user may recognize whether the user input interface 230 is operated or the display device 100 is controlled through the output interface 250.

For example, the output interface 250 may include an LED 251 for flashing, a vibrator 253 for generating vibration, a speaker 255 for outputting sound, or a display 257 for outputting an image, if the user input interface 230 is manipulated or signals are transmitted/received to/from the display device 100 through the wireless communication interface 220.

Additionally, the power supply circuit 260 supplies power to the remote control device 200 and if the remote control device 200 does not move for a predetermined time, stops the power supply, so that power waste may be reduced.

The power supply circuit 260 may resume the supply of power if a predetermined key provided at the remote control device 200 is operated.

The memory 270 may store various kinds of programs and application data required to control or operate the remote control device 200.

If the remote control device 200 transmits/receives signals wirelessly through the display device 100 and the RF circuit 221, the remote control device 200 and the display device 100 transmits/receives signals through a predetermined frequency band.

The controller 280 of the remote control device 200 may store, in the memory 270, information on a frequency band for transmitting/receiving signals to/from the display device 100 paired with the remote control device 200 and refer to it.

The controller 280 controls general matters relating to the control of the remote control device 200. The controller 280 may transmit a signal corresponding to a predetermined key operation of the user input interface 230 or a signal corresponding to the movement of the remote control device 200 sensed by the sensor 240 to the display device 100 through the wireless communication interface 220.

In addition, the microphone 290 of the remote control device 200 may acquire voice.

A plurality of microphones 290 may be provided.

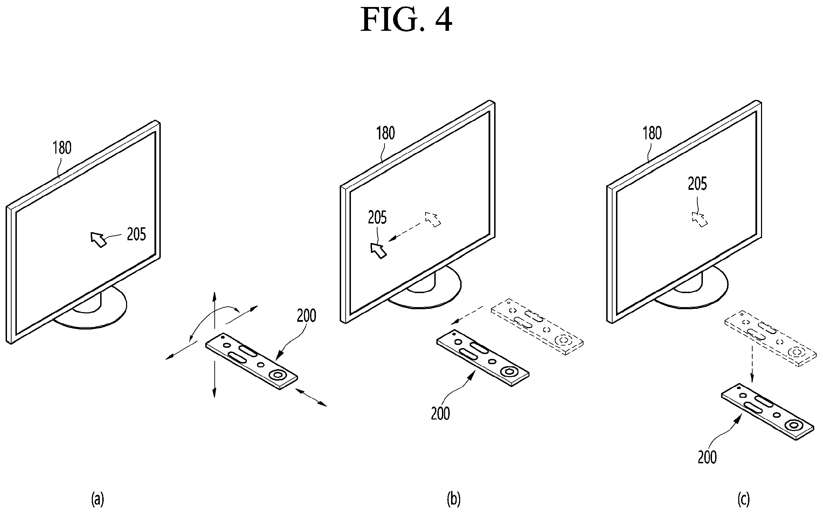

Next, FIG. 4 is described.

FIG. 4 is a view illustrating an example of utilizing a remote control device according to an embodiment of the present disclosure.

FIG. 4(a) illustrates that a pointer 205 corresponding to the remote control device 200 is displayed on the display 180.

A user may move or rotate the remote control device 200 vertically or horizontally. The pointer 205 displayed on the display 180 of the display device 100 corresponds to a movement of the remote control device 200. Since the corresponding pointer 205 is moved and displayed according to a movement on a 3D space as show in the drawing, the remote control device 200 may be referred to as a spatial remote control device.

FIG. 4(b) illustrates that if a user moves the remote control device 200, the pointer 205 displayed on the display 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

FIG. 4(c) illustrates that while a specific button in the remote control device 200 is pressed, a user moves the remote control device 200 away from the display 180. Thus, a selected region in the display 180 corresponding to the pointer 205 may be zoomed in and displayed in an enlarged size.

On the other hand, if a user moves the remote control device 200 close to the display 180, a selection area in the display 180 corresponding to the pointer 205 may be zoomed out and displayed in a reduced size.

On the other hand, if the remote control device 200 is moved away from the display 180, a selection area may be zoomed out and if the remote control device 200 is moved closer to the display 180, a selection area may be zoomed in.

Additionally, if a specific button in the remote control device 200 is pressed, recognition of a vertical or horizontal movement may be excluded. In other words, if the remote control device 200 is moved away from or closer to the display 180, the up, down, left, or right movement maynot be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display 180 and also may be displayed in correspondence to a plurality of points such as a line and a surface.

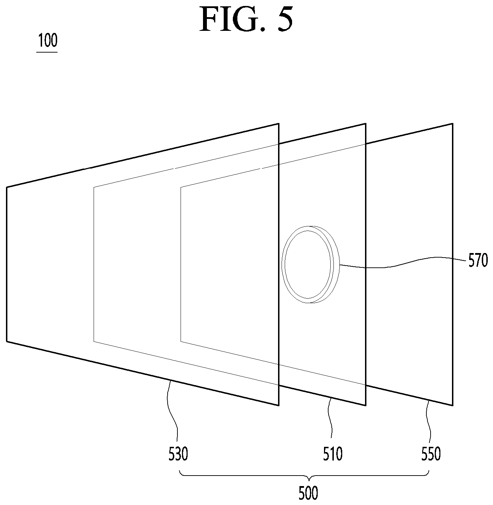

FIG. 5 is a view illustrating the configuration of a transparent display device according to an embodiment of the present disclosure.

Referring to FIG. 5, a transparent display device 100 may include a transparent display 500 and a main body 570.

The main body 570 may include a broadcast receiving part 130, an external device interface 135, a memory 140, a user input interface 150, a controller 170, a wireless communication interface 173, a speaker 185, and a power supply circuit 190 described in FIG. 1.

The transparent display 500 can perform all the functions performed by the display 180 described in FIG. 1.

A transparent display 500 may include a transparent display panel 510, a reinforced glass cover 530, and a transparent back cover 550.

The transparent display panel 510 may be either a projection display type or a transmissive display type.

The projection display type may be a type that uses technology to display images by projecting light onto a transparent screen.

The transmissive display type may be one that uses technology to change the transmittance of the material itself, such as OLED, which emits light.

The transparent display panel 510 may include an OLED panel in which each pixel includes an organic light-emitting diode (OLED). In other words, the transparent display panel 510 may have a transmissive display type.

A tempered glass cover 530 can be attached to the front surface of the transparent display panel 510 to protect the transparent display panel 510.

The tempered glass cover 530 may be made of transparent glass to protect the transparent display panel 510 from external impact.

The transparent back cover 550 may be a cover attached to the rear surface of the transparent display panel 510.

A main body 570 may be mounted in a certain area of the transparent back cover 550. The shape of the certain area may be circular, but this is only an example, and may have a shape such as a square.

The main body 570 can be connected to a bracket for fixing the transparent display 500 to a wall.

A controller 170 provided in the main body 570 can control the transmittance of the transparent display panel 510 by applying an electric signal to the transparent display panel 510.

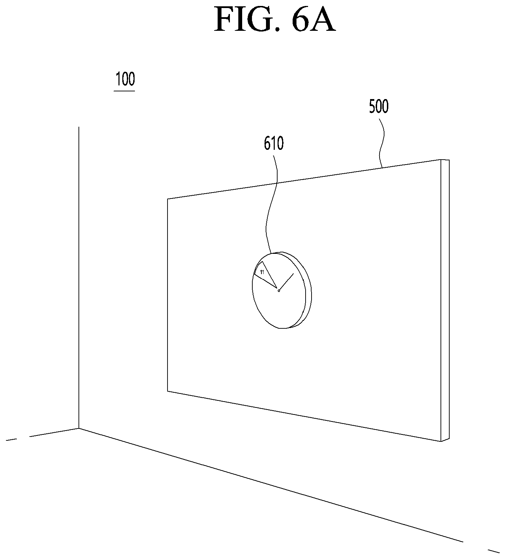

FIGS. 6a to 6d are views explaining various types of transparent display devices.

FIG. 6a is an embodiment in which the main body 570 is located in the central area of the transparent display 500.

The transparent display 500 can display information on a first area 610 corresponding to the position of the main body 570.

On the first area 610, one or more of time information, weather information, and schedule information may be displayed. On the first area 610, information may be displayed by applying the AOD (Always On Display) function.

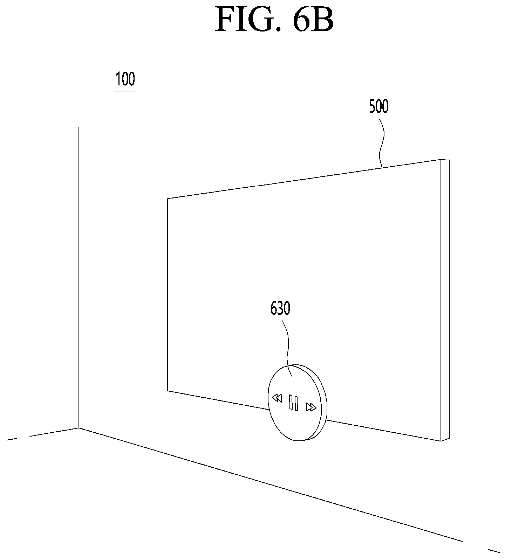

FIG. 6b is an embodiment in which the main body 570 is located in the lower area of the transparent display 500.

A part of the main body 570 may be exposed at the lower end of the transparent display 500.

The transparent display 500 can display music playback information on a second area 630 corresponding to the position of the main body 570. The main body 570 can be equipped with a speaker, and the speaker can play music.

The user can view information about the music being played through the second area 630. In addition, the user can control the playback of the music through the music playback information displayed on the second area 630 through the remote control device 200.

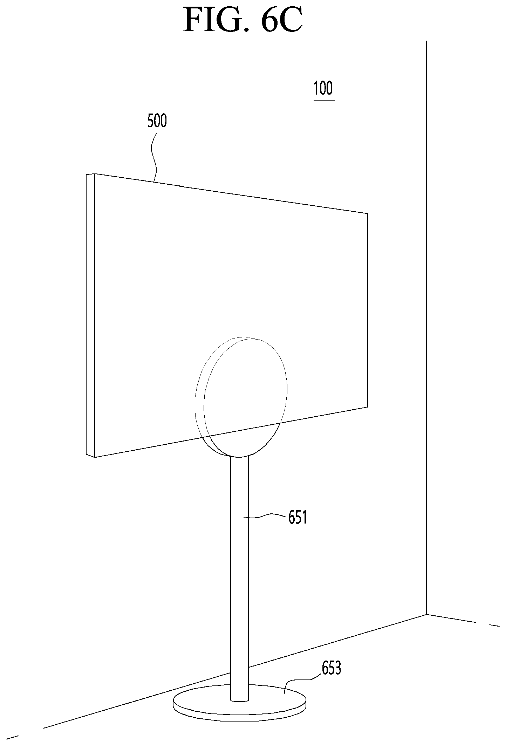

FIG. 6c is an embodiment explaining a structure in which a main body 570 is connected to a stand 651.

In FIG. 6c, the main body 570 is not fixed to the wall, but can be fixed by being connected to a stand 651. The stand 651 can be connected to a base 653 that serves as a support for the floor.

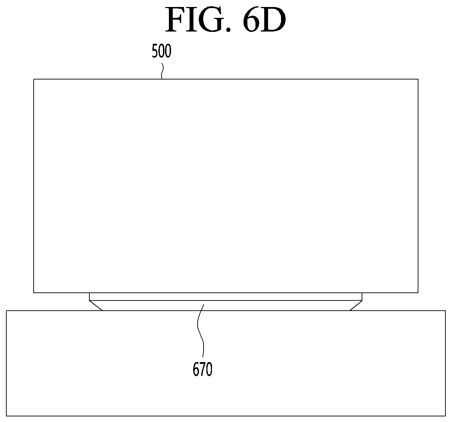

FIG. 6d illustrates a transparent display 500 placed on a living room shelf. The transparent display 500 can be positioned on the upper surface of the living room shelf via a support 670.

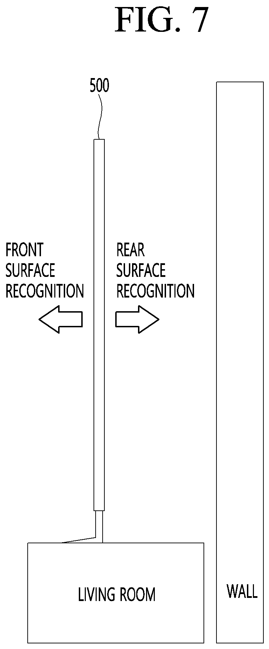

FIG. 7 is a view explaining a side structure of a transparent type of display device of the present disclosure.

In FIG. 7, it is assumed that the display device 100 is placed on the upper surface of the living room as described in FIG. 6d.

A camera (not illustrated) is placed on the transparent display 500 to recognize objects located at the front surface or rear surface. To this end, the camera may be equipped with a front camera that detects objects at the front surface and a rear camera that detects objects at the rear surface.

An object can be either a user or an object (including a wall).

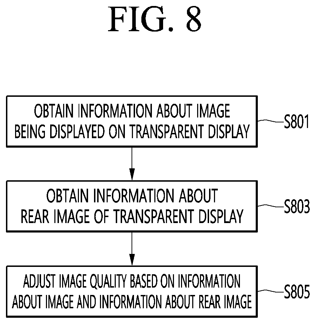

FIG. 8 is a flowchart for explaining a method for operating a transparent display device according to an embodiment of the present disclosure.

Hereinafter, the display device 100 is referred to as a transparent display device.

**The controller 170 of the transparent display device 100 obtains information on the image being displayed on the transparent display 180 (S801).**

In one embodiment, the image information may include one or more of RGB information and texture information of the image.

The controller 170 can divide the entire area where an image input on a transparent display 180 is displayed into a plurality of areas and obtain RGB information of each area.

The controller 170 can divide the entire area where an image input on a transparent display 180 is displayed into a plurality of areas and obtain texture information of each area.

**The controller 170 obtains information about the rear image of the transparent display 180 (S803).**

In one embodiment, a camera or RGB sensor may be provided on the rear surface of the transparent display 180.

The controller 170 can obtain information about the rear of the transparent display 180 through a camera or RGB sensor.

Information about the rear image of the transparent display 180 may include RGB information about the rear of the transparent display 180.

In particular, the controller 180 can obtain RGB information for a rear area corresponding to the entire area of the transparent display 180.

**The controller 170 adjusts the image quality of the image being displayed on the transparent display 180 based on the image information and the information about the rear image (S805).**

In one embodiment, the controller 170 can control the image quality of the image displayed on the transparent display 180 by comparing the image information with the information about the rear image of the transparent display 180.

The controller 170 can compare image information with rear image information to adjust one or more of the image quality elements.

The embodiment of FIG. 8 will be described in more detail.

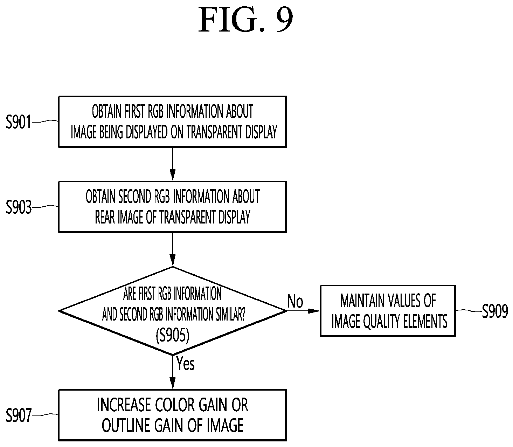

FIG. 9 is a view explaining a process for automatically setting the image quality of an image displayed on a transparent display according to an embodiment of the present disclosure.

Referring to FIG. 9, **the controller 170 obtains first RGB information for an image being displayed on a transparent display 180 (S901).**

In one embodiment, the first RGB information may include information about an RGB histogram of the image. The information about the RGB histogram may include a distribution of values from 0 to 255 of each of a plurality of pixels constituting the transparent display 180.

The controller 170 can divide the entire area occupied by the image being displayed into partial areas of the first group and obtain a first set of RGB histograms for each partial area.

The image displayed on the transparent display 180 may be a content image.

**The controller 170 obtains second RGB information for the rear of the transparent display 180 (S903).**

The controller 170 can obtain second RGB information for a rear image photographed using an RGB sensor or camera placed on the rear surface of the transparent display 180.

The second RGB information may include information about an RGB histogram for the rear image.

The controller 170 can divide the entire area occupied by the rear image into partial areas of the second group and obtain a second set of RGB histograms for each partial area.

The entire area occupied by the rear image can correspond to the entire area occupied by the transparent display 180.

Accordingly, each of the partial areas of the first group and each of the partial areas of the second group can correspond to each other.

The number of partial areas of the first group and the number of partial areas of the second group can be 20, but this is only an example.

**The controller 170 determines whether the first RGB information and the second RGB information are similar (S905).**

The controller 170 can compare the RGB histogram of each of the partial areas of the first group with the RGB histogram of each of the partial areas of the second group.

Specifically, the controller 170 can calculate an RGB gain value using the RGB histogram of each of the partial areas of the first group, and can calculate an RGB gain value using the RGB histogram of each of the partial areas of the second group.

The controller 170 can determine whether the difference between the RGB gain value of a partial area of the first group and the RGB gain value of a partial area of the second group corresponding thereto is less than a threshold value.

The controller 170 can determine that the RGB information of the corresponding area is similar if the difference between the RGB gain values is less than the threshold value.

The controller 170 can determine that RGB information of the corresponding area is not similar if the difference between the RGB gain values is equal to or greater than a threshold value.

**If the first RGB information and the second RGB information are similar, the controller 170 increases the gain of the color of the image being displayed on the transparent display 180 or the gain of the outline of the image (S907).**

If the controller 170 determines that the RGB information of a partial area of the first group and the RGB information of a partial area of the second group corresponding thereto are similar, the controller 170 can increase the gain of the color of the corresponding area.

If the controller 170 determines that the RGB information of a partial area of the first group and the RGB information of a partial area of the second group corresponding thereto are similar, the controller 170 can increase the gain of the outline of the corresponding area.

The controller 170 can extract the outline of the content being displayed in the corresponding area and increase the gain of the extracted outline.

If the controller 170 determines that the RGB information of a partial area of the first group and the RGB information of a partial area of the second group corresponding thereto are similar, the controller can increase the gain of the color and the gain of the outline of the corresponding area.

In other words, the controller 170 can increase at least one of the color gain or the outline gain of the area to improve the visibility and readability of the partial image being displayed in the area.

In this way, according to an embodiment of the present disclosure, image quality elements of an image can be automatically controlled to reduce the influence of an image displayed on a transparent display 180 on a background image of the transparent display 180.

Accordingly, when viewing an image through a transparent display 180, the user can be guaranteed visibility and readability of the image regardless of the surrounding background.

**Meanwhile, if the controller 170 determines that the first RGB information and the second RGB information are not similar, it maintains the values of the image quality elements (S909).**

The controller 170 can maintain the setting values of image quality elements if the RGB histograms between the partial area of the first group and the partial area of the second group corresponding thereto are not similar.

Image quality factors may include one or more of sharpness, color gain, outline gain, color temperature, brightness, and contrast.

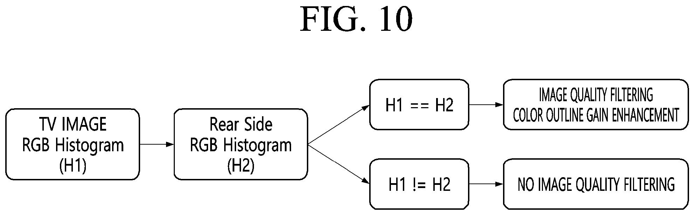

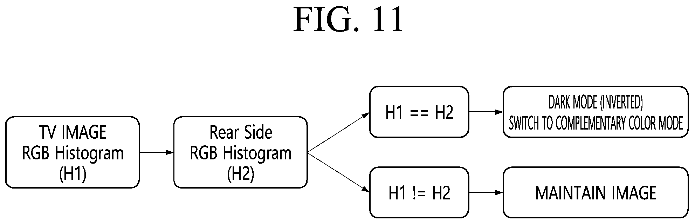

FIGS. 10 and 11 are views illustrating a process of controlling image quality of an image according to the rear background of a transparent display according to one embodiment of the present disclosure.

Referring to FIG. 10, the controller 170 can obtain a first RGB histogram H1 of an image being displayed on a transparent display 180 and a second RGB histogram H2 for a rear image of the transparent display 180.

The controller 170 can determine whether the first RGB histogram H1 and the second RGB histogram H2 are similar. Specifically, the controller 170 can determine the similarity of the RGB histograms of each of the partial areas of the first group described in FIG. 9 and each of the partial areas of the second group corresponding thereto.

The controller 170 can control the setting values of the image quality elements of an image being displayed on a transparent display 180 if the similarity between the first RGB histogram H1 and the second RGB histogram H2 is greater than or equal to a preset similarity.

Specifically, the controller 170 can enhance at least one of the color gain or the outline gain of the image.

The controller 170 can maintain the set values of the image quality elements of the image being displayed on the transparent display 180 if the similarity between the first RGB histogram H1 and the second RGB histogram H2 is less than the preset similarity.

The controller 170 can operate the operation mode of the transparent display 180 in a viewing mode when the similarity between the first RGB histogram H1 and the second RGB histogram H2 is greater than or equal to a preset similarity.

The controller 170 can reduce the transparency of the transparent display 180 under the viewing mode. For example, the controller 170 can reduce the transparency to the maximum so that the background of the transparent display 180 is not visible under the viewing mode.

The viewing mode of the transparent display 180 may be a mode that increases at least one of the color gain or the outline gain of the image for viewing the image.

The controller 170 can operate the operation mode of the transparent display 180 in a deco mode when the similarity between the first RGB histogram H1 and the second RGB histogram H2 is less than the preset similarity.

The controller 170 can increase the transparency of the transparent display 180 under the deco mode. For example, the controller 170 can increase the transparency to the maximum so that the background of the transparent display 180 is not visible under the deco mode.

The deco mode of the transparent display 180 may be a mode that reduces at least one of the color gain or the outline gain of the image in order to use the transparent display 180 as a decoration.

Meanwhile, according to another embodiment of the present disclosure, the transparent display device 100 may further include a illumination sensor (not illustrated) and control the image quality based on the ambient illumination value acquired through the illumination sensor.

For example, the controller 170 may increase one or more of the color gain or the outline gain of the image as the ambient illumination value of the transparent display 180 increases, and may decrease one or more of the color gain or the outline gain of the image as the ambient illumination value decreases.

The controller 170 can increase at least one of the color gain and the outline gain if the similarity between the first RGB histogram H1 and the second RGB histogram H2 is equal to or greater than a preset similarity and the ambient illumination value is equal to or greater than a preset value.

The controller 170 may reduce at least one of the color gain and the outline gain ifn the similarity between the first RGB histogram H1 and the second RGB histogram H2 is less than the preset similarity and the ambient illumination value is less than the preset value.

Next, FIG. 11 is described.

The controller 170 can adjust the color of the image displayed on the transparent display 180 to the complementary color of the color of the rear image if the similarity between the first RGB histogram H1 and the second RGB histogram H2 is equal to or greater than a preset similarity.

The controller 170 can switch the operation mode of the transparent display 180 to complementary color mode if the similarity between the first RGB histogram H1 and the second RGB histogram H2 is equal to or greater than a preset similarity.

The complementary color mode may be a mode that adjusts the color of the image to a color that is in a complementary color relationship with the color of the rear image of the transparent display 180.

In another embodiment, if the similarity between the first RGB histogram H1 and the second RGB histogram H2 is equal to or greater than a preset similarity, the operation mode of the transparent display 180 can be switched to a dark (inverted) mode.

The dark mode may be a mode that maximizes transparency if the rear image of the transparent display 180 is a black image, and minimizes transparency if the rear image of the transparent display 180 is a white image.

In this way, according to an embodiment of the present disclosure, the image quality of the content image can be automatically controlled according to the rear image of the transparent display 180, thereby greatly improving visibility and readability.

In particular, when the transparent display device 100 is provided in a movable form, optimal image quality can be provided regardless of the position of the transparent display device 100.

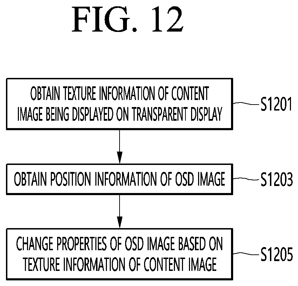

FIG. 12 is a flowchart for explaining a method for operating a transparent display device according to another embodiment of the present disclosure.

In particular, FIG. 12 is an embodiment of changing the properties of an OSD (On Screen Display) image according to the texture of the content image being displayed on a transparent display 180.

Referring to FIG. 12, the controller 170 obtains texture information of a content image being displayed on a transparent display 180 (S1201).

In one embodiment, texture information of an image may include information about frequency components of the image. The texture information may include information about high-frequency components and low-frequency components of the image.

**The controller 170 obtains position information of the OSD image being displayed on the transparent display 180 (S1203).**

The controller 170 can obtain the position of the OSD area occupied by the OSD image being displayed in a different layer from the content image. The position information of the OSD area can include coordinates of the area where the OSD image is being displayed.

The order of steps S1201 and S1203 may be reversed.

**The controller 170 changes the properties of the OSD image based on the texture information of the content image (S1205).**

In one embodiment, the properties of the OSD image may include one or more of the position of the OSD image, the size of the OSD image, or the color of the OSD image.

The controller 170 can change the properties of the OSD image if a high frequency component of the content image exists in the OSD area occupied by the OSD image.

This is explained with reference to the drawings below.

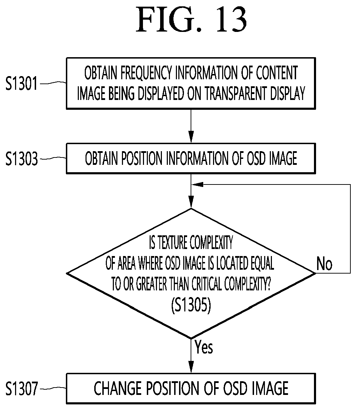

FIGS. 13 to 16 are views illustrating examples of changing properties of an OSD image based on texture information of a content image displayed on an OSD area where the OSD image is located according to an embodiment of the present disclosure.

Referring to FIG. 13, the controller 170 obtains frequency information of a content image being displayed on a transparent display 180 (S1301).

The controller 170 can obtain frequency information for each of a plurality of NxN pixel areas (blocks).

The controller 170 performs frequency conversion on each of a plurality of NxN pixel units, and according to the result of the performance, classifies each of a plurality of blocks occupying a content image into a high-frequency component area and a low-frequency component area.

The magnitude of the sharpness in the high-frequency component area can be greater than the magnitude of the sharpness in the low-frequency component area.

**The controller 170 obtains position information of the OSD image being displayed on the transparent display 180 (S1303).**

**The controller 170 determines whether the texture complexity of the OSD area where the OSD image is located is equal to or greater than the critical complexity (S1305).**

In one embodiment, the controller 170 may determine that the texture complexity for the OSD area is equal to or greater than a critical complexity if a high-frequency component area exists in the OSD area occupied by the OSD image.

In another embodiment, the controller 170 may determine that the texture complexity is equal to or greater than the critical complexity if the high-frequency component area overlaps the OSD area occupied by the OSD image by a preset amount or more.

**The controller 170 changes the position of the OSD image if the texture complexity for the OSD area is equal to or greater than the critical complexity (S1307).**

In one embodiment, the controller 170 can move the OSD image to a low frequency component area if the texture complexity for the OSD area is equal to or greater than a threshold complexity.

In another embodiment, the controller 170 can move the OSD image to an area that is complementary to the color of the OSD image.

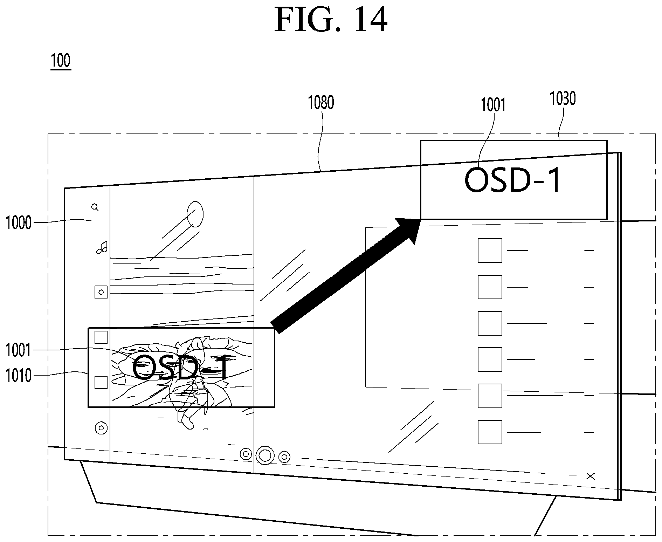

Referring to FIG. 14, a transparent display device 100 displays a content image 1000 and an OSD image 1001 on a transparent display 180.

The controller 170 of the transparent display device 100 can obtain texture information of the content image 1000 for the first OSD area 1010 occupied by the OSD image 1001.

In one embodiment, the controller 170 may move the position of the OSD image 1000 from the first OSD area 1010 to the second OSD area 1030 if a high frequency component exists in the first OSD area 1010. The second OSD area 1030 may be an area where no high frequency component exists.

In another embodiment, the controller 170 may move the position of the OSD image 1000 from the first OSD area 1010 to the second OSD area 1030 if the size of the high frequency component area overlapping the first OSD area 1010 is equal to or greater than a preset area. The second OSD area 1030 may be an area where no high frequency components exist.

In this way, according to an embodiment of the present disclosure, the position of the OSD image can be moved according to the texture of the content image, thereby improving the visibility and readability of the OSD image.

Meanwhile, if the first OSD area 1030 and the high-frequency component area of the content image overlap, the controller 170 can reduce the size of the OSD image 1001 so that it does not overlap with the area corresponding to the high-frequency component.

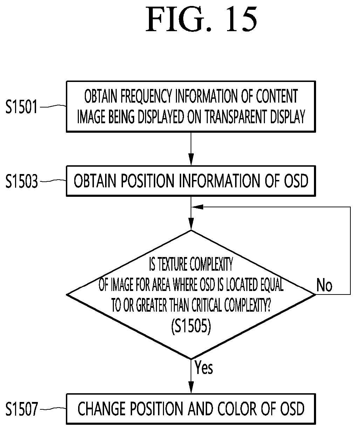

Next, FIG. 15 is described.

In FIG. 15, the description of the duplicate content from the embodiment of FIG. 13 is replaced with the embodiment of FIG. 13.

Referring to FIG. 15, the controller 170 obtains frequency information of a content image being displayed on a transparent display 180 (S1501).

**The controller 170 obtains position information of the OSD image being displayed on the transparent** display **180 (S1503).**

**The controller 170 determines whether the texture complexity of the OSD area where the OSD image** is **located is equal to or greater than the threshold complexity (S1505).**

**The controller 170 changes the position and color of the OSD image if the texture complexity for the OSD area** is **equal to or greater than the threshold complexity (S1507).**

In one embodiment, the controller 170 can change the color of the OSD image while moving the OSD image to a low frequency component area if the texture complexity for the OSD area is equal to or greater than a threshold complexity.

The controller 170 can change the color of the OSD image to a color that is complementary to the color of the rear area if the RGB information of the OSD image and the RGB information of the rear area corresponding to the low frequency component area determined as the moving area of the OSD image are similar.

The RGB information may include an RGB histogram, and the similarity determination of the RGB histogram may utilize the embodiments of FIGS. 9 to 11.

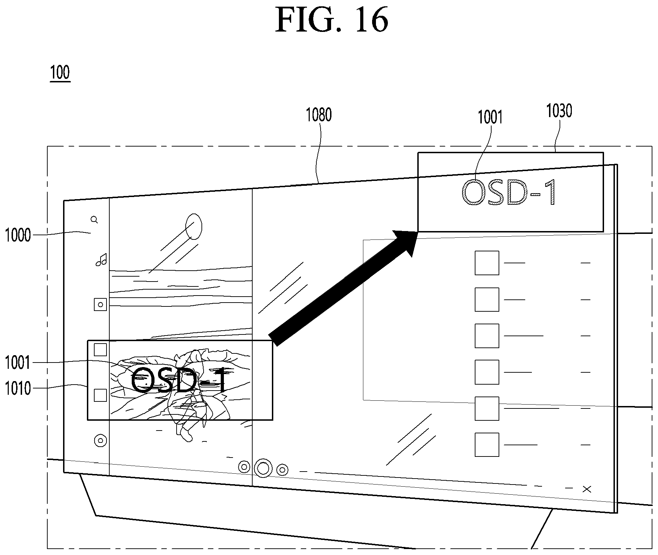

Referring to FIG. 16, a transparent display device 100 displays a content image 1000 and an OSD image 1001 on a transparent display 180.

The controller 170 of the transparent display device 100 can obtain texture information of the content image 1000 for the first OSD area 1010 occupied by the OSD image 1001.

In one embodiment, the controller 170 may move the position of the OSD image 1000 from the first OSD area 1010 to the second OSD area 1030 if a high frequency component exists in the first OSD area 1010. The second OSD area 1030 may be an area where no high frequency component exists.

The controller 170 can acquire the rear image of the second OSD area 1030 through an RGB sensor or camera.

The controller 170 can compare RGB information of the OSD image 1001 with RGB information of the rear image of the second OSD area 1030, and determine whether to change the color of the OSD image 1001 based on the comparison result.

If the RGB information of the OSD image 1001 and the RGB information of the rear image of the second OSD area 1030 are similar, the controller 170 can change the OSD image 1001 to a color that is complementary to the color of the rear image.

In this way, according to an embodiment of the present disclosure, the visibility and readability of the OSD image can be improved by changing the position and color of the OSD image according to the texture of the content image.

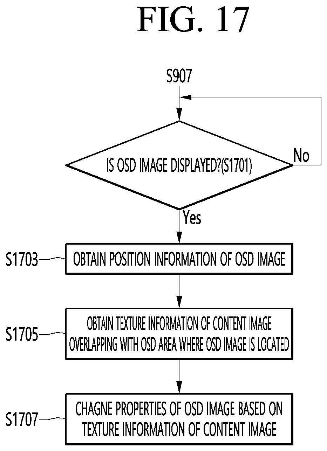

FIG. 17 is a view explaining a method for controlling image quality of a transparent display device according to another embodiment of the present disclosure.

FIG. 17 describes a process performed after the embodiment of FIG. 9.

In FIG. 17, after performing steps S901 to S907 of FIG. 9, step S1701 may be performed.

**After adjusting the color or outline of the image, the controller 170 checks whether the OSD image is displayed on the transparent display 180 (S1701).**

**The controller 170 obtains position information of the OSD image if the OSD image is displayed on the transparent display 180 (S1703).**

The controller 170 can obtain the position of the OSD area occupied by the OSD image being displayed in a different layer from the content image. The position information of the OSD area can include coordinates of the area where the OSD image is being displayed.

**The controller 170 obtains texture information of a content image overlapping with the OSD area where the OSD image is located based** on **the position information of the OSD image (S1705).**

In one embodiment, the texture information may include information about frequency components of the content image. The texture information may include information about high-frequency components and low-frequency components of the image.

**The controller 170 changes the properties of the OSD image based on the texture information of the content image (S1707).**

The controller 170 can change one or more of the position of the OSD image, the size of the OSD image, or the color of the OSD image based on the texture information of the content image.

The embodiments of Figs. 13 to 16 can be applied to this.

According to one embodiment of the present disclosure, the above-described method can be implemented as a processor-readable code on a medium in which a program is recorded. Examples of the processor-readable medium include a ROM, a RAM, a CD-ROM, a magnetic tape, a floppy disk, an optical data storage device, and the like.

The display device described above is not limited to the configuration and method of the embodiments described above, and the embodiments may be configured by selectively combining all or part of each embodiment so that various modifications can be made.

## Claims

1. A transparent display device, comprising:
a transparent display displaying a content image;
a camera photographing a rear image of the transparent display; and
a controller obtaining first RGB information on the content image and second RGB information on the rear image, comparing the first RGB information and the second RGB information, and controlling the image quality of the content image based on the comparison result.

2. The transparent display device of claim 1,
wherein the controller
extracts a first RGB histogram included in the first RGB information and a second RGB histogram included in the second RGB information, and
if the difference between the RGB gain of the first RGB histogram and the RGB gain of the second RGB histogram is less than a threshold value, increases the gain of the color or the gain of the outline of the content image.

3. The transparent display device of claim 2,
wherein the controller,
if the difference between the RGB gain of the first RGB histogram and the RGB gain of the second RGB histogram is equal to or greater than a threshold value, maintains the setting values of the image quality elements of the content image.

4. The transparent display device of claim 1,
wherein the controller,
if the similarity between the first RGB information and the second RGB information is equal to or greater than a preset similarity, reduces the transparency of the transparent display.

5. The transparent display device of claim 1,
wherein the controller,
if the similarity between the first RGB information and the second RGB information is less than the preset similarity, increases the transparency of the transparent display.

6. The transparent display device of claim 1,
wherein the controller
further displays an OSD image on the transparent display,
obtains position information of the OSD image and texture information of the content image overlapping the OSD area where the OSD image is located, and
changes the properties of the OSD image based on the texture information.

7. The transparent display device of claim 6,
wherein the property of the OSD image includes at least one of the position, size, and color of the OSD image.

8. The transparent display device of claim 7,
wherein the controller,
if the content image overlapping the OSD area contains a high-frequency component, moves the position of the OSD image to a low-frequency component area of the content image.

9. The transparent display device of claim 7,
wherein the controller,
if the OSD area and the high frequency component area of the content image overlap, reduces the size of the OSD image so that it does not overlap with the area corresponding to the high frequency component.

10. The transparent display device of claim 9,
wherein the controller,
if the RGB information of the rear area corresponding to the frequency component area and the RGB information of the OSD image are similar, changes the color of the OSD image to a color that is complementary to the color of the rear area.

11. A method for operating a transparent display device, comprising:
displaying a content image on a transparent display;
photographing a rear image of the transparent display;
obtaining first RGB information on the content image and second RGB information on the rear image;
comparing the first RGB information and the second RGB information; and
controlling the image quality of the content image based on a comparison result.

12. The method for operating a transparent display device of claim 11,
the controlling the image quality includes
extracting a first RGB histogram included in the first RGB information and a second RGB histogram included in the second RGB information, and
if a difference between the RGB gain of the first RGB histogram and the RGB gain of the second RGB histogram is less than a threshold value, increasing a color gain or an outline gain of the content image.

13. The method for operating a transparent display device of claim 12, further comprising:
further displaying an OSD image on the transparent display;
obtaining position information of the OSD image and texture information of the content image overlapping the OSD area where the OSD image is located; and
changing the property of the OSD image based on the texture information,
wherein the property of the OSD image includes at least one of the position, size, and color of the OSD image.

14. The method for operating a transparent display device of claim 13,
wherein the changing the properties of the OSD image includes, if the content image overlapping the OSD area includes a high-frequency component, moving the position of the OSD image to a low-frequency component area of the content image.

15. The method for operating a transparent display device of claim 13,
wherein the changing the properties of the OSD image includes, if the OSD area and the high frequency component area of the content image overlap, reducing the size of the OSD image so that it does not overlap with the area corresponding to the high frequency component.
